# FASCICULE DE BREVET EUROPEEN

(11) **EP 0 602 281 B1**
(45) Date de publication et mention de la délivrance du brevet: **19.12.2001**
(21) Numéro de dépôt: 92203694.2
(22) Date de dépôt: 30.11.1992
(51) Int. Cl.: H04L 12/56

(54) **Dispositif de reséquencement pour un noeud d'un système de commutation de cellules**
Einrichtung zum Wiederherstellen der richtigen Zellenfolge in einem Knoten eines Zellenvermittlungssystems
Resequencing means for a cell switching system node

(43) Date de publication de la demande: 22.06.1994
(73) Titulaire: ALCATEL, 75008 Paris (FR)
(72) Inventeur: Therasse, Yves, B-1450 Chastre (BE); Guebels, Pierre-Paul François, B-2650 Edegem (BE)
(74) Mandataire: Narmon, Gisèle Marie Thérèse

(56) Documents cités:
- WO-A-91/02419
- WO-A-91/02420
- WO-A-91/08633

## Description

L'invention concerne un dispositif de reséquencement pour un noeud d'un système de commutation de cellules. Elle concerne plus particulièrement les systèmes de commutation dans lesquels les cellules ont une longueur variable, chaque cellule pouvant être constituée d'un nombre variable de sous-cellules ayant une longueur fixe.

Chaque fois que ces cellules transitent à travers un noeud d'un système de commutation elles subissent chacune un retard variable en fonction du chemin suivi dans le réseau de commutation que comporte ce noeud. Les sous-cellules d'une même cellule sont liées de telle sorte qu'elles suivent un même chemin et subissent un même retard. A la sortie du réseau de commutation, les sous-cellules d'une même cellule ont donc conservé leur ordre initial, par contre les cellules n'ont pas toujours conservé leur ordre initial à cause de la dispersion des retards. Un dispositif de reséquencement a pour fonction de remettre ces cellules dans leur ordre initial.

La demande de brevet européen n°0 438 415 (Alcatel NV) décrit un procédé de reséquencement consistant à retarder chaque cellule d'un retard déterminé de telle façon que le retard total imposé par le réseau de commutation et par le dispositif de reséquencement ait une valeur sensiblement constante pour toutes les cellules, cette valeur étant généralement choisie supérieure au retard maximal que peut créer le réseau de commutation. Si le retard total est choisi inférieur à la valeur maximale du retard que peut créer le réseau de commutation, la probabilité d'une pertubation de l'ordre initial n'est pas nulle, et est fonction de la valeur choisie pour le retard total. Ce procédé connu comporte deux variantes.

Une première variante consiste à : associer à chaque cellule entrant dans le réseau de commutation une étiquette temporelle qui indique à quel instant la cellule a pénétré dans le réseau de commutation; à extraire l'étiquette temporelle de chaque cellule sortant du réseau de commutation; à stocker chaque cellule sortant du réseau, jusqu'à ce que l'heure indiquée par le générateur d'étiquettes temporelles soit égale à l'heure indiquée dans l'étiquette temporelle de la cellule, plus le retard total choisi; et alors autoriser l'émission de la cellule sur une sortie du dispositif de reséquencement. L'émission est effectivement réalisé sitôt que la sortie à laquelle la cellule et destinée est disponible.

Selon cette variante, l'ordre initial des cellules est reconstitué sans avoir à mesurer ou à estimer le retard de transit de chaque cellule à travers le réseau de commutation. Par contre, l'heure fournie par le générateur d'étiquettes temporelles doit être disponible dans un dispositif situé à l'entrée du réseau pour attribuer des étiquettes temporelles, et doit être disponible simultanément dans un dispositif de reséquencement situé à la sortie du réseau, pour autoriser l'émission de chaque cellule à un instant convenable.

Selon une autre variante de ce procédé connu, il consiste à associer à chaque cellule sortant du réseau une étiquette dont la valeur est une estimation du retard subi par la cellule au cours de son transit à travers le réseau; et à faire subir à chaque cellule un retard supplémentaire de durée égale à la différence entre la valeur prédéterminée du retard total et la valeur estimée du retard de transit dans le réseau, cette dernière étant lue dans l'étiquette associée à chaque cellule. Cette variante présente l'avantage de ne pas nécessiter un dispositif associant des étiquettes temporelles aux cellules arrivant aux entrées du réseau de commutation.

Cette demande de brevet décrit aussi un dispositif de reséquencement mettant en oeuvre la première variante du procédé mentionné ci-dessus, pour des cellules constituées chacune d'un nombre variable de sous-cellules ayant chacune une longueur fixe. Chaque sortie d'un noeud est munie d'un exemplaire de ce dispositif. Ce dispositif comporte :
- un générateur de premières étiquettes temporelles, fournissant une valeur incrémentée d'une unité pour chaque intervalle de temps correspondant à une sous-cellule, avec une durée de cycle au moins égale au retard total prédéterminé pour retarder uniformément toutes les cellules;
- une mémoire tampon ayant une entrée couplée à une entrée du dispositif de reséquencement, et ayant une sortie couplée à une sortie du dispositif de reséquencement; chaque emplacement de cette mémoire ayant une capacité égale à une sous-cellule;
- un circuit de gestion de cette mémoire tampon, pour fournir des adresses d'emplacements libres dans cette mémoire tampon et pour y stocker respectivement les sous-cellules de chaque cellule reçue par le dispositif de reséquencement;
- un pointeur de lecture-écriture associé à la mémoire tampon;
- une mémoire d'adresses ayant des emplacements correspondant respectivement aux diverses valeurs possibles de l'étiquette temporelle; chaque emplacement de cette mémoire d'adresses stockant un pointeur de début de liste et un pointeur de fin de liste qui sont respectivement les adresses, dans la mémoire tampon, de la première et de la dernière sous-cellule d'une suite contenant toutes les cellules ayant une même étiquette temporelle;
- une mémoire de liens, ayant le même ensemble d'adresses que la mémoire tampon, pour mémoriser des liens entre les adresses de toutes les sous-cellules ayant une même étiquette temporelle, et pour mémoriser des liens entre les adresses de sous-cellules appartenant à des cellules devant être émises successivement;
- un pointeur d'écriture associé à cette mémoire d'adresses pour stocker dans chaque emplacement la première adresse et la dernière adresse d'une liste d'adresses d'emplacements de la mémoire tampon, contenant toutes les sous-cellules de toutes les cellules ayant la même étiquette temporelle;
- un pointeur de lecture associé à la mémoire d'adresses, ayant un fonctionnement cyclique, pour lire successivement les contenus des emplacements de cette mémoire d'adresses, afin de lire des sous-cellules dans la mémoire tampon à des adresses correspondant à des étiquettes temporelles croissant de manière régulière.

Lorsque le délai expire pour une suite de cellules ayant une étiquette temporelle donnée, c'est-à-dire lorsque l'heure indiquée par le générateur d'étiquettes est égale à la somme de l'étiquette temporelle donnée et du retard total prédéterminé, la première et la dernière adresse de stockage de cette suite sont lues dans l'emplacement de la mémoire d'adresses correspondant à cette étiquette temporelle. Puis la mémoire de liens fournit la suite complète d'adresses, et permet donc de lire dans la mémoire tampon toutes les sous-cellules de toutes les cellules ayant l'étiquette temporelle considérée. Ces cellules sont lues dans un ordre qui est celui défini par les liens dans la mémoire de liens, mais cet ordre n'a pas d'importance puisque toutes ces cellules ont la même étiquette temporelle et sont adressées à une même sortie. La mémoire de liens est utilisée en outre pour enchaîner dans une même file d'attente les différentes suites de sous-cellules de cellules ayant des étiquettes temporelles successives, ce qui assure leur émission en bon ordre. Cet enchaînement est réalisé en faisant correspondre par la mémoire de liens la fin de la suite d'adresses de sous-cellule d'une cellule avec le début de la suite d'adresses de sous-cellule de la cellule à émettre ensuite.

Ce dispositif a un premier inconvénient qui est de ne pouvoir remettre en ordre des cellules arrivant sur une même entrée et étant destinées à plusieurs sorties, en particulier lorsqu'une même cellule doit être diffusée sur plusieurs sorties. Cette impossibilité découle du principe de fonctionnement de ce dispositif connu, parce qu'il nécessite de stocker, dans la mémoire d'adresses, à chaque emplacement, une adresse de début de suite d'adresses et une adresse de fin de suite d'adresses de sous-cellules; et qu'il nécessite de lier par une mémoire de liens toutes les sous-cellules qui devront ultérieurement être émises sur une même sortie. Les dispositifs de reséquencement associés aux différentes sorties d'un noeud fonctionnent donc indépendamment les uns des autres.

Ce dispositif connu a en outre pour inconvénient de ne pas permettre de grandes longueurs de cellule. Chaque emplacement de la mémoire d'adresses correspond à une unité de temps du générateur qui délivre les étiquettes temporelles. Cette unité de temps est égale à la durée d'une sous-cellule. Le générateur d'étiquettes temporelle n'a pas une capacité infinie. Il délivre donc des valeurs étiquettes identiques périodiquement. Chaque emplacement de la mémoire d'adresses est lu avec une période constante, au plus égale à la période du générateur d'étiquettes temporelles. Au moment de la lecture d'un emplacement, il faut que la constitution de la liste soit terminée, pour qu'une adresse de fin de liste puisse être lue valablement dans l'emplacement considéré. La période du générateur d'étiquettes temporelles limite donc le nombre de sous-cellules correspondant à cette liste, et finalement limite le nombre de sous-cellules que peut comporter chaque cellule.

Par ailleurs, il n'est pas possible d'augmenter indéfiniment la période du générateur d'étiquettes temporelles car cela nécessite d'augmenter le nombre de bits adjoints à chaque cellule pour constituer une étiquette temporelle.

Un premier but de l'invention est de proposer un dispositif de reséquencement permettant la diffusion d'une cellule d'une entrée vers plusieurs sorties prédéterminées, du dispositif de reséquencement. Un second but de l'invention est de proposer un dispositif de reséquencement pouvant être adapté plus facilement pour qu'il accepte des cellules composées d'un grand nombre de sous-cellules.

L'objet de l'invention est un dispositif de reséquencement pour un noeud d'un système de commutation de cellules, chaque cellule étant constituée d'un nombre variable de sous-cellules ayant une longueur fixe, ce noeud comportant un réseau de commutation transmettant les cellules avec des premiers retards variables, toutes les sous-cellules d'une même cellule subissant un même premier retard; ce dispositif de reséquencement comportant des moyens pour stocker toutes les cellules ayant été transmises à travers le réseau de commutation, puis les émettre sur au moins une sortie du dispositif de reséquencement, après l'expiration de divers délais d'attente constituant des seconds retards tels que, pour chaque cellule, la somme du premier et du second retard est égale à une valeur prédéterminée sensiblement identique pour toutes les cellules; ces moyens comportant :
- une mémoire tampon pour stocker toutes les sous-cellules de chaque cellule reçue par le dispositif de reséquencement;
- une mémoire d'adresses pour mémoriser l'adresse, de la mémoire tampon, contenant la première sous-cellule de chaque cellule;
- des moyens pour retrouver l'adresse, de la mémoire d'adresses, contenant la première sous-cellule d'une cellule, lorsque le délai d'attente de cette dernière a expiré, et qu'une sortie qui doit émettre cette cellule est disponible;
caractérisé en ce que les moyens pour retrouver l'adresse, de la mémoire tampon, contenant la première sous-cellule d'une cellule, comportent :
- une mémoire dite de cellules en attente, du type accessible par son contenu, pour mémoriser un identificateur dit de cellule en attente, lorsqu'une cellule est stockée dans la mémoire tampon; cet identificateur étant stocké à une adresse identique à celle où est stockée, dans la mémoire d'adresses, l'adresse FSA de la première sous-cellule; et cet identificateur étant constitué : d'une étiquette temporelle identifiant un intervalle de temps au cours duquel expire le délai d'attente de cette cellule, et de l'identité d'au moins une sortie sur laquelle elle doit être émise;
- des moyens pour retrouver, dans la mémoire de cellules en attente, l'identificateur de chaque cellule lorsque son délai d'attente expire, et fournir, pour chaque identificateur retrouvé, l'adresse, de la mémoire de cellules en attente, qui contient cet identificateur retrouvé;
- des mémoires dites de queue, associées respectivement aux sorties du noeud, et accessibles par leur contenu, pour mémoriser un numéro d'ordre pour chaque cellule qui est destinée à la sortie associée à la mémoire considérée;
- des moyens pour déterminer et inscrire dans une mémoire de queue un numéro d'ordre, à l'adresse fournie par les moyens pour retrouver l'identificateur de chaque cellule lorsque son délai d'attente expire;
- des moyens pour retrouver, dans un ordre croissant, chaque numéro mémorisé dans la mémoire de queue d'une sortie, lorsque cette sortie devient disponible; et pour restituer l'adresse, de cette mémoire de queue, contenant le numéro retrouvé;
- des moyens, pour lire une adresse de première sous-cellule, dans la mémoire d'adresses, à l'adresse restituée par les moyens pour retrouver chaque numéro.

Le dispositif ainsi caractérisé est compatible avec une diffusion parce qu'il est associé à l'ensemble des sorties d'un noeud et parce que la mémoire de cellules en attente stocke des identificateurs qui peuvent contenir chacun plusieurs identités de sortie destinataire.

D'autre part, il est plus facile à réaliser pour des cellules de grandes longueurs car l'identificateur d'une cellule en attente peut être mémorisé dans cette mémoire sans attendre que toutes les sous-cellules de cette cellule aient été effectivement reçues par le noeud. Les premières sous-cellules d'une cellule peuvent donc être émises sur une sortie avant même que les dernières sous-cellules aient été reçues.

Les revendications 2 à 4 ont pour objet un mode réalisation préférentiel du dispositif selon l'invention.

L'invention sera mieux comprise et d'autres détails apparaîtront à l'aide de la description ci-dessous et des figures l'accompagnant :
- la figure 1 représente le schéma synoptique d'un exemple de réalisation du dispositif selon l'invention, raccordé à un réseau de commutation, pour constituer un noeud d'un système de commutation de cellules;
- la figure 2 représente un schéma synoptique plus détaillé de cet exemple de réalisation.

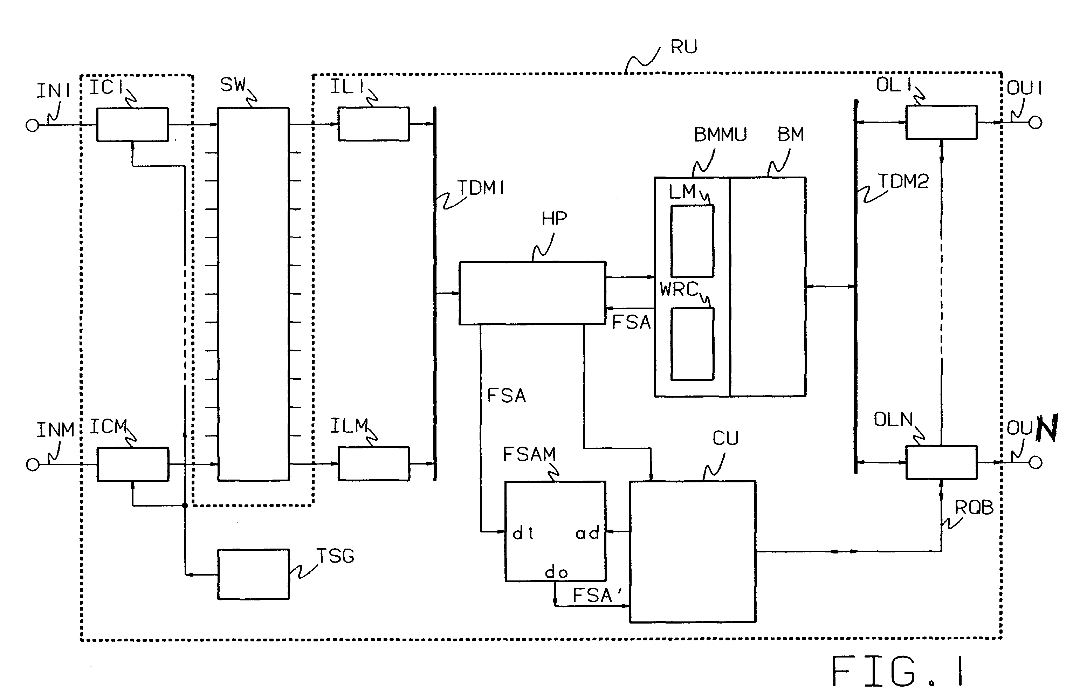

La figure 1 représente un noeud d'un réseau de télécommunications à mode de transfert asynchrone, comportant un réseau de commutation SW et un exemple de réalisation, RU, du dispositif de reséquencement selon l'invention. Ce noeud comporte M entrées IN1,...,INM, et N sorties OU1,...,OUN. Cet exemple de réalisation du dispositif de reséquencement RU comporte :
- M circuits étiquetteurs IC1,...,ICM, ayant chacun : une entrée reliée respectivement à une entrée IN1,...,INM du noeud, une sortie reliée respectivement à l'une des N entrées du réseau de commutation SW, et une entrée commune;
- M circuits d'entrée IL1,...,ILM ayant chacun : une entrée reliée respectivement à l'une des M sorties du réseau de commutation SW, et une sortie reliée à un bus TDM1 à multiplexage temporel;
- un circuit HP de traitement des en-têtes de cellule, ayant une première entrée reliée au bus TDM1;
- une unité de commande CU qui sera détaillée plus loin et qui comporte une première entrée reliée respectivement à une première sortie du circuit HP de traitement des en-têtes;
- un générateur d'étiquettes temporelles, TSG, ayant une sortie reliée à l'entrée commune des circuits étiquetteurs IC1,...,ICM, ; ce générateur étant constitué d'une horloge et d'un compteur, non représentés, pour fournir une valeur d'étiquette temporelle incrémentée d'une unité pour chaque intervalle de temps correspondant à une sous-cellule, de O à TSTPmax, modulo TSTPmax;
- une mémoire tampon BM associée à une unité de gestion de mémoire tampon BMMU, cet ensemble ayant : une entrée reliée à une deuxième sortie du circuit HP de traitement d'en-têtes, une sortie reliée à une deuxième entrée du circuit HP, et une entrée-sortie reliée à un bus TDM2 à multiplexage temporel;
- une mémoire FSAM appelée mémoire d'adresses, ayant : une entrée de données, di, reliée à une troisième sortie du circuit HP, une entrée d'adresse ad reliée à une sortie de l'unité CU, et une sortie do reliée à une deuxième entrée de l'unité CU;
- N circuits de sorties OL1,...,OLN ayant chacun : une entrée-sortie reliée au bus TDM2, une sortie reliée respectivement à l'une des sorties OU1,...,OUN du noeud, et une entrée-sortie reliée à un bus RQB, lui-même relié à une entrée-sortie de l'unité de commande CU.

Les entrées IN1,...,INM reçoivent des cellules de longueur fixe ou variable, constituées chacune de sous-cellules ayant toutes le même nombre de bits et la même durée, cette durée étant appelée période de sous-cellule. Le dispositif selon l'invention est particulièrement adapté pour traiter des cellules à longueur variable. Ces cellules sont commutées dans le réseau de commutation SW en routant toutes les sous-cellules d'une même cellule par un même chemin et en maintenant la continuité de la cellule, c'est-à-dire sans entrelacer des sous-cellules appartenant à des cellules différentes. Ceci permet d'attribuer une étiquette temporelle unique pour l'ensemble des sous-cellules constituant une cellule. Cette étiquette temporelle indique l'intervalle de temps pendant lequel la première sous-cellule de la cellule considérée est reçue à l'une des entrées IN1,...,INM.

Cette étiquette permet de reséquencer les cellules sortant du réseau de commutation SW : la première sous-cellule est autorisée à sortir du noeud lorsque son délai d'attente a expiré, c'est-à-dire au cours de l'intervalle de temps où le générateur TSG indique une heure égale à la somme de la valeur de l'étiquette temporelle qui fut attribuée à la cellule, et d'une valeur fixée. Mais il y a une condition supplémentaire pour que la cellule soit émise : la sortie à laquelle est destinée cette cellule, doit être disponible. Sinon, il faut que la cellule considérée attende encore jusqu'à ce que cette sortie soit disponible.

Chaque sous-cellule commence par deux bits appelés champ de contrôle de sous-cellule. Dans la première sous-cellule de chaque cellule, ces deux bits ont pour valeur 11 par exemple. Dans toutes les autres sous-cellules, sauf la dernière, ces deux bits ont pour valeur 00 par exemple. Dans la dernière sous-cellule, ces deux bits ont pour valeur 01 par exemple. La première sous-cellule comporte en outre un champ appelé en-tête de contrôle de cellule. Ce champ contient notamment l'identité de la sortie qui doit émettre cette cellule, ou de plusieurs sorties dans le cas d'une diffusion. Les autres bits des sous-cellules transmettent des données.

Les étiquetteurs IC1,...,ICM ont pour fonction d'insérer dans le champ de contrôle de cellule, de chaque cellule, une étiquette temporelle fournie par le générateur TSG à l'instant où la première sous-cellule de cette cellule est reçue par le noeud. Cette étiquette temporelle TSTP indique l'intervalle de temps au cours duquel expirera le délai d'attente de la cellule. Elle est déterminée en fonction du contenu du compteur de TSG à l'instant où cette cellule arrive, et en fonction du retard total prédéterminé que chaque cellule doit subir. Dans un mode de réalisation préférentiel, le modulo TSTPmax, du compteur est choisi égal à ce retard total prédéterminé, la valeur de l'étiquette temporelle TSTP est alors numériquement égale à la valeur fournie par le compteur, à cause du modulo TSTPmax.

Quand l'un des circuits d'entrée IL1,....,ILM reçoit une cellule, il demande à l'unité de gestion BMMU des adresses libres pour stocker respectivement les sous-cellules de cette cellule dans la mémoire tampon BM. Afin d'optimiser l'utilisation de la mémoire tampon BM, les sous-cellules d'une même cellule ne sont pas stockées à des adresses consécutives mais à des adresses aléatoires. L'unité de gestion BMMU comporte notamment un circuit WRC de commande d'écriture et de lecture, stockant les adresses libres de la mémoire tampon BM au fur à mesure qu'elles sont libérées par l'émission de cellules, et comporte une mémoire de liens SLM stockant toutes les adresses des emplacements, de la mémoire tampon BM, stockant respectivement toutes les sous-cellules d'une même cellule. Chaque emplacement de la mémoire tampon a une capacité égale à une sous-cellule.

La réalisation de la mémoire tampon BM et de l'unité de gestion BMMU est à la portée de l'Homme de l'Art car elle est décrite notamment dans la demande de brevet européen EP 0 441 787 (Alcatel NV). Préférentiellement, la mémoire tampon BM et la mémoire de liens SLM ont un même ensemble d'adresses pour faciliter la réalisation .

La demande émise par l'un des circuits d'entrée IL1,...,ILM est transmise par le bus TDM1, puis par le circuit de traitement d'en-têtes HP jusqu'à l'unité de gestion BMMU. Cette dernière attribue aux sous-cellules de la cellule considérée une suite d'emplacements libres de la mémoire tampon BM. Une suite d'adresses désignant ces emplacements libres est fournie par le circuit WRC. Des liens entre les adresses de cette suite sont constitués en mémorisant cette suite d'adresses dans la mémoire de liens SLM, à des adresses consécutives. L'unité de gestion BMMU fournit au circuit de traitement d'en-têtes, HP, une valeur FSA qui est la première adresse de cette suite d'adresses d'emplacements de la mémoire tampon BM. L'adresse FSA est retransmise sur la troisième sortie du circuit HP. Cette adresse FSA est inscrite dans la mémoire d'adresses FSAM dans un emplacement libre dont l'adresse est fournie par la sortie de l'unité CU.

Cette adresse FSA permettra ultérieurement de retrouver toutes les sous-cellules de cette cellule dans la mémoire tampon BM : En utilisant cette adresse FSA, il est possible de lire, dans la mémoire de liens SLM, l'adresse d'une deuxième sous-cellule dans la mémoire-tampon BM. Puis, avec l'adresse de cette deuxième sous-cellule, il est possible de lire dans la mémoire de liens SLM l'adresse d'une troisième sous-cellule dans la mémoire tampon BM. Il est donc possible d'obtenir succesivement les adresses de toutes les sous-cellules d'une même cellule à partir d'une adresse FSA unique. Ces adresses permettent ensuite de lire les sous-cellules elles-mêmes, dans la mémoire tampon BM.

Le circuit HP extrait, dans le champ de contrôle de cellule de la première sous-cellule de chaque cellule reçue, le champ contenant l'étiquette temporelle TSTP et un champ contenant l'identité de la sortie, ou des sorties, OU1,...,OUN, sur laquelle ou lesquelles la cellule doit être émise. Il fournit à la première entrée de l'unité de commande CU un identificateur, dit de cellule en attente, qui est constitué de ces informations.

Pour émettre une cellule, le fonctionnement de l'unité de commande CU est déclenché par les circuits de sortie OL1,...,OLN lorsque l'un de ces circuits de sortie est disponible, c'est-à-dire lorsqu'il a fini d'émettre une cellule. Il envoie sur le bus RQB un message noté IDL contenant l'identité de la sortie qui est disponible, et adressé à l'unité de commande CU. L'unité de commande CU détermine alors quelle cellule va être émise sur cette sortie. L'unité CU envoie, au circuit de sortie demandeur, l'adresse FSA' d'un emplacement, de la mémoire tampon BM, contenant la première sous-cellule d'une cellule. Le circuit de sortie demande ensuite à la mémoire tampon BM et à son unité de gestion BMMU, de lui fournir la suite complète des sous-cellules de cette cellule. Puis il l'émet sur sa sortie.

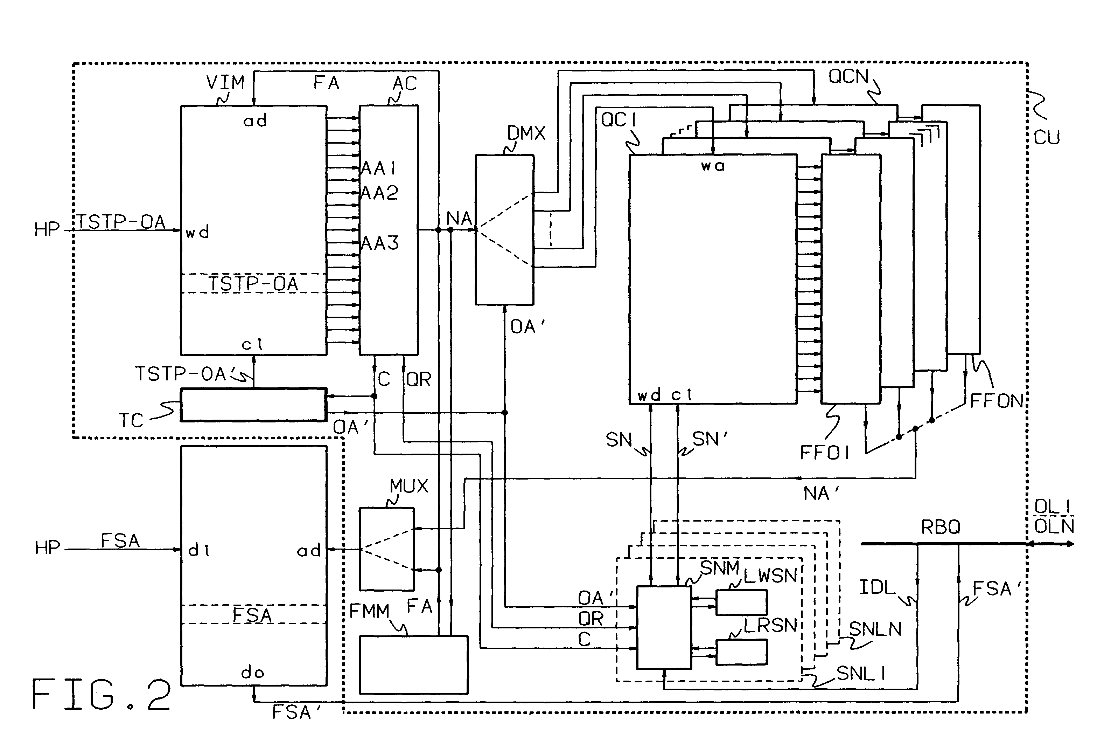

La figure 2 représente le schéma synoptique d'un exemple de réalisation de l'unité de commande CU, qui comporte :
- une mémoire VIM, dite de cellules en attente, du type accessible par le contenu, qui a le même ensemble d'adresses que les mémoires FSAM et BM, et qui possède une sortie d'un bit pour chaque emplacement de mémoire, le nombre d'emplacements étant choisi en fonction du nombre N de sorties du noeud, et du délai d'attente moyen des cellules dans la mémoire tampon BM;
- un circuit d'arbitrage et de codage, AC, ayant une pluralité d'entrées reliées respectivement aux sorties de la mémoire VIM;
- un multiplexeur DMX ayant : une entrée de données, N sorties, et une entrée de commande;
- un circuit logique TC, dit de commande de transfert de cellules;
- un multiplexeur MUX ayant : deux entrées de données, une sortie, et une entrée de commande non représentée;
- un circuit logique FMM dit de gestion des adresses des mémoires VIM et FSAM;
- N mémoires de queue, QC1, ..., QCN, du type accessible par le contenu, ayant le même ensemble d'adresses que la mémoire VIM, et chaque mémoire de queue ayant une sortie d'un bit pour chaque emplacement de mémoire;
- N circuits d'arbitrage, FFO1, ..., FFON, respectivement associés au N mémoires QC, ..., QCN et ayant chacun une pluralité d'entrées respectivement connectées aux sorties de l'une des mémoires QC1, ..., QCN;
- N circuits logiques dits de mise en queue, SNL1, ..., SNLN, respectivement associés au N mémoires QC1, ..., QCN.

La première entrée de l'unité de commande CU, qui reçoit un identificateur de cellules en attente fourni par le circuit HP de traitement des en-têtes, est reliée à une entrée wd d'écriture de données, de la mémoire VIM. La deuxième entrée de l'unité de commande CU, qui reçoit l'adresse FSA' fournie par la sortie de données de la mémoire FSAM, est reliée au bus RQB par une interface non représentée. Le bus RBQ est relié aussi par cette interface à une première entrée commune des circuits de mise en queue, SNL1, ..., SNLN, pour fournir un signal IDL à l'un de ces circuits lorsque le circuit de sortie correspondant, OL1, ..., OLN, est disponible pour émettre une cellule.

La mémoire de cellules en attente, VIM, comporte en outre : une entrée d'adresse, ad, reliée à une sortie du circuit de gestion FMM; et une entrée dite de comparaison, ci, reliée à une première sortie du circuit TC de commande de transfert. Lorsqu'un mot binaire est appliqué à l'entrée de comparaison ci, la mémoire VIM compare ce mot binaire avec les mots binaires contenus respectivement dans ses emplacements mémoires. Lorsque les comparaisons donnent un seul résultat positif, la mémoire VIM fournit un bit de valeur 1 sur la sortie correspondant à cet emplacement mémoire. Si les comparaisons donnent plusieurs résultats positifs, la mémoire VIM fournit un bit de valeur 1 sur chacune des sorties correspondant aux emplacements mémoires où le résultat est positif.

Le circuit d'arbitrage et de codage AC a pour fonction de coder chacun de ces signaux sous la forme d'un mot binaire. Une première sortie du circuit AC fournit donc un mot binaire NA dont la valeur est l'adresse de l'emplacement mémoire considéré. La première sortie du circuit d'arbitrage et de codage AC est reliée à l'entrée de données du démultiplexeur DMX et à une entrée du circuit de gestion FMM.Si les comparaisons donnent plusieurs résultats positifs, le circuit AC les code successivement, dans l'ordre des adresses décroissantes, par exemple. Le circuit AC possède une deuxième sortie qui fournit, à une entrée du circuit de commande de transfert TC, et à une deuxième entrée commune des circuits de mise en queue SLN1, ..., SNLN, un signal logique C lorsqu'il y a au moins un résultat positif, et qui le maintient jusqu'à le circuit AC ait fourni toutes les adresses correspondant à ces résultats positifs. Il possède en outre une troisième sortie, reliée à une troisième entrée commune à tous les circuits de mise en queue SNL1, ..., SNLN, pour leur fournir un signal logique QR constitué d'une impulsion pour chaque adresse fournie par le circuit AC.

Une deuxième sortie du circuit de commande de transfert TC est reliée à l'entrée de commande du démultiplexeur DMX et à une quatrième entrée commune de tous les circuits de mise en queue SNL1, ..., SNLN.

Le multiplexeur MUX possède une première entrée reliée à une sortie commune des circuits d'arbitrage FFO1, ..., FFON; une seconde entrée reliée à la sortie du circuit de gestion des adresses, FMM; une sortie constituant la sortie de l'unité de commande CU, et reliée à l'entrée ad d'adresse d'écriture et de lecture dans la mémoire FSAM; et une entrée de commande, non représentée, qui est reliée à une sortie d'un séquenceur non représenté qui fournit des signaux de commande à tous les éléments constituant l'unité de commande CU.

Le démultiplexeur DMX possède N sorties reliées respectivement aux entrées wa d'adresse d'écriture des mémoires de mise en queue QC1, ..., QCN. Chacune des mémoires de mise en queue, QC1, ..., QCN, possède : une entrée de comparaison, ci, et une entrée d'écriture de données, wd, qui sont reliées respectivement à deux sorties du circuit de mise en queue SNL1, ..., SNLN, qui correspond à la mémoire considérée.

Chaque circuit de mise en queue SNL1, ..., SNLN comporte :
- un compteur LWSN dit de dernier numéro écrit;
- un compteur LRSN dit de dernier numéro lu;
- et un circuit logique SNM de gestion de numéros.

Les compteurs LWSN et LRSN possèdent chacun une entrée de commande et une sortie reliées respectivement à une sortie et à une entrée du circuit SNM. Le circuit SMN possède quatre entrées qui constituent respectivement la première, la deuxième, la troisième, et la quatrième entrée du circuit de mise en queue; et possède deux sorties qui constituent respectivement les deux sorties du circuit de mise en queue.

Considérons successivement les trois grandes étapes du traitement d'une cellule par ce dispositif de reséquencement : sa réception et sa mise en attente dans la mémoire de cellules en attente, puis sa recherche, sa récupération, et son transfert dans la mémoire de mise en queue, lorsque le délai d'attente a expiré; et enfin son émission lorsque la sortie destinataire est disponible. Pour clarifier, supposons tout d'abord que le dispositif ne reçoit que des cellules telles chaque cellule est destinée à une seule sortie représentée par une adresse OA.

Lorsqu'une cellule est reçue par le dispositif de réséquencement, elle est inscrite dans la mémoire tampon BM, et l'unité BMMU de gestion de la mémoire tampon fournit à l'entrée de données di de la mémoire FSAM l'adresse FSA de l'emplacement, de la mémoire tampon BM, contenant la première sous-cellule de cette cellule. Simultanément le circuit HP de traitement des en-têtes fournit un identificateur de cellule en attente TSTP-OA, à l'entrée wd d'écriture de données de la mémoire VIM. Cette identificateur comporte : un champ, TSTP, qui est une étiquette temporelle indiquant l'intervalle de temps au cours duquel le délai d'attente expirera; et un champ, OA, désignant la sortie destinataire de la cellule.

Le circuit FMM de gestion des adresses des mémoires VIM et FSAM fournit une adresse disponible FA, à l'entrée d'adresse d'écriture, ad, de la mémoire VIM, et à l'entrée d'adresse, ad, de la mémoire FSAM, via le multiplexeur MUX. L'identificateur TSTP-OA et l'adresse de première sous-cellule, FSA, sont donc inscrits respectivement dans les mémoires VIM et FSAM à une même adresse. Le délai d'attente d'une cellule est égal à un multiple entier de la période de sous-cellule. A intervalles réguliers, N fois plus petits que la période de sous-cellule, la première sortie du circuit de commande de transfert TC fournit un identificateur TSTP'-OA', dit de cellule à mettre en queue, qui est constitué : de la valeur TSTP' des étiquettes temporelles de toutes les cellules dont le délai d'attente expire au cours de la période de sous-cellule en cours; et de l'identité OA' d'une sortie unique du noeud.

Chaque identificateur de cellule à mettre en queue peut éventuellement identifier plusieurs cellules qui sont à émettre sur une même sortie et dont les délais d'attente expirent au cours de la même période de sous-cellule. L'expiration de son délai d'attente donne à une cellule l'autorisation d'être mise en queue, sous une forme symbolique dans la mémoire de queue correspondant à la sortie destinataire. Mais elle n'est pas encore autorisée à être émise effectivement.

Le circuit TC comporte un compteur modulo TSTPmax qui est incrémenté à chaque période de sous-cellule et qui est initialisé de telle sorte que la valeur TSTP' qu'il fournit est égale à la valeur de l'étiquette temporelle courante moins un retard prédéterminé, égal par exemple à la durée maximale de transfert d'une cellule dans le réseau de commutation SW. Dans un exemple de réalisation particulièrement simple, la valeur du modulo TSTPmax est prise égale à la durée maximale de transfert d'une cellule dans le réseau de commutation SW, ce qui a pour conséquence que la valeur TSTP' est numériquement égale à la valeur de l'étiquette temporelle courante, TSTP, ce qui permet d'utiliser le même compteur pour le générateur TSG d'étiquette temporelle courante et pour le compteur de TSTP' dans le circuit de commande de transfert TC.

Le circuit de commande TC comporte un second compteur. Pour chaque période de sous-cellule, il fournit N valeurs de OA'. Ainsi le circuit TC détermine N identificateurs de cellules à mettre en queue, TSP'-OA', constitués d'une même valeur TSTP' et de N valeurs de l'adresse de sortie OA' qui est prise égale successivement à 1, ..., N, par exemple. La valeur de cette adresse de sortie est fournie simultanément sur la deuxième sortie du circuit TC pour être appliquée à l'entrée de commande du démultiplexeur DMX et à la quatrième entrée commune de tous les circuits de mise en queue SNL1, ..., SNLN.

Chaque identificateur TSTP'-OA' est appliqué à l'entrée de comparaison ci de la mémoire VIM pour retrouver, s'il y en a, des identificateurs de cellule en attente, TSTP-OA, correspondant à cet identificateur de cellule à mettre en queue. Si les comparaisons effectuées par la mémoire VIM entre l'identificateur TSTP'-OA' et les identificateurs TSTP-OA qu'elle contient donnent des résultats positifs, il y a un signal logique de valeur 1 sur certaines sorties de cette mémoire. Par exemple, les sorties correspondant aux adresses AA1, AA2, AA3 de cette mémoire fournissent chacune un signal qui indique que ces adresses contiennent des identificateurs TSTP-OA de cellules en attente ayant la valeur de l'identificateur TSTP'-OA' de cellules à mettre en queue.

Le circuit d'arbitrage et de codage AC reçoit ces signaux et fournit tout d'abord un mot binaire NA ayant la valeur AA1, à l'entrée de données du démultiplexeur DMX et à l'entrée du circuit FMM de gestion des adresses. Il fournit en outre un signal logique C au circuit TC de commande de transfert pour indiquer qu'au moins une cellule a été retrouvée, et il fournit un signal logique QR aux circuits de mise en queue SNL1, ..., SNLN pour leur demander de mettre en queue la cellule qui a été retrouvée. L'adresse OA' est fournie simultanément aux circuits de mise en queue, SNL1, ..., SNLN de façon à ne valider que celui correspondant à la sortie destinataire de la cellule retrouvée. Par ailleurs l'adresse OA' commande le démultiplexeur DMX pour qu'il transmette l'adresse NA seulement à la mémoire de queue correspondant à la sortie destinataire de la cellule qui a été retrouvée.

Puis le circuit AC fournit une adresse NA ayant la valeur AA2 en maintenant le signal C, et en renouvellant le signal QR demandant une mise en queue. Enfin le circuit AC fournit une adresse NA égale à AA3, en maintenant le signal C et en renouvellant le signal QR pour demander de nouveau une mise queue. Enfin le circuit AC supprime le signal C pour indiquer au circuit TC que toutes les cellules retrouvées ont été mise en queue, et qu'il est donc possible d'incrémenter la valeur de l'adresse de sortie OA'. Toutes ces opérations de mise en queue pour les N valeurs de l'adresse de sortie OA' doivent être réalisées pendant la durée d'une période de sous-cellule, de façon à pouvoir incrémenter la valeur de TSTP' au même rythme que l'incrémentation des valeurs de l'étiquette temporelle courante TSTP.

Chaque fois qu'une cellule a été mise en queue, l'emplacement occupé par son identificateur TSTP-OA dans la mémoire VIM peut être réutilisé. C'est pourquoi le circuit FMM de gestion des adresses des mémoires VIM et FSAM reçoit chaque valeur de l'adresse NA, pour la mémoriser comme adresse disponible.

Quand l'un des circuits SNM de gestion de numéros reçoit le signal logique C, en étant validé par une adresse de sortie, OA', qui est effectivement la sienne, il incrémente d'une unité, puis lit, le contenu du compteur LWSN de dernier numéro écrit. Puis il inscrit la valeur SN de ce contenu, à l'adresse NA, dans la mémoire de queue QC1, ..., ou QCN correspondant à l'adresse de sortie OA'. Chaque impulsion du signal QR commande l'inscription d'une valeur de NA dans la même mémoire de queue.

Dans l'exemple où NA prend successivement les valeurs AA1, AA2, AA3, le numéro d'ordre SNi est inscrit à l'adresse AA1 dans la mémoire de queue correspondant à l'adresse de sortie OA'. Puis ces opérations sont réitérées pour traiter l'adresse suivante : AA2. Le même numéro d'ordre SNi est écrit à l'adresse AA2 dans la même mémoire de queue. Puis ces opérations sont réitérées pour traiter l'adresse suivante : AA3. Ainsi le numéro d'ordre SNi est inscrit dans la même mémoire de queue à l'adresse AA3.

Lorsqu'il y a aucune cellule à mettre en queue, le circuit AC ne fournit aucun signal C et aucun signal QR. La valeur de l'adresse NA fournie par le circuit AC est nulle, mais sans signification. Elle n'est pas prise en compte puisqu'il y n'y a pas de signal C de résultat positif, ni de signal QR de demande de mise en queue.

Considérons maintenant l'émission d'une cellule lorsqu'une sortie destinataire de cette cellule est disponible. Le circuit de sortie OU1,...,OUN dont la sortie est disponible émet un message sur le bus RQB. Un signal IDL parvient jusqu'au circuit de mise en queue, SNL1,...,SNLN correspondant à la sortie disponible. Le signal IDL commande le circuit de gestion de numéros, SNM, pour incrémenter d'une unité, et lire, le contenu du compteur de dernier numéro lu, LRSN. Ce contenu constitue un numéro SN' qui va être recherché dans la mémoire de mise en queue QC1,...,QCN correspondant à la sortie disponible. L'incrémentation uniforme de ce numéro SN' assure que les cellules sont récupérées dans l'ordre où elles ont été numérotées au moment de la mise en queue, c'est-à-dire dans l'ordre défini par les valeurs TSTP', qui est l'ordre chronologique de réception des cellules par le noeud.

Ce numéro SN' est fourni à l'entrée de comparaison ci de cette mémoire de mise en queue. Cette mémoire fournit un signal logique sur une ou plusieurs de ses sorties, selon qu'il y a un ou plusieurs emplacements de cette mémoire qui contienne un numéro identique au numéro recherché : SN'. Le circuit d'arbitrage FFO1, ..., FFON associé à la mémoire considérée fournit un mot binaire dont la valeur est égale successivement au rang de chacune des sorties de cette mémoire, qui fournissent un signal. Les valeurs de ces rangs représentent les adresses NA' des emplacements, de la mémoire de queue, contenant le numéro recherché. Ces adresses NA' sont restituées successivement dans l'ordre des rangs décroissants, par exemple.

Lorsque plusieurs cellules ont la même étiquette temporelle, elles sont mises en queue avec un même numéro d'ordre SN, car leur ordre d'émission peut être quelconque, sans inconvénients. Le mode de réalisation décrit ci-dessus présente l'avantage de nécessiter une capacité des compteurs LWSN et LRSN plus faible que si un numéro d'ordre différent était attribué à chaque cellule mise dans une mémoire de queue donnée.

Par exemple, si le numéro recherché est SNi, qui est mémorisé dans trois adresses AA1, AA2, AA3 dans cette mémoire, le circuit d'arbitrage fournit successivement les valeurs AA1, AA2, AA3 de l'adresse NA' à la première entrée du multiplexeur MUX. Ce dernier transmet ces adresses à la mémoire FSAM pour y lire successivement trois valeurs d'adresses de première sous-cellule, FSA'. Chaque valeur de l'adresse FSA' est transmise par le bus RQB au circuit de sortie OL1, ..., ou OLN ayant émis le message contenant le signal IDL indiquant qu'une sortie est disponible. Le circuit de sortie retransmet ces valeurs d'adresse de première cellule, FSA', via le bus TDM2, à l'unité de gestion BMMU de la mémoire tampon BM pour lire dans cette mémoire tampon toutes les sous-cellules des trois cellules correspondant aux trois valeurs d'adresse FSA'. Puis ces sous-cellules sont transmises via le bus TMD2 à ce circuit de sortie, qui les émet sur sa sortie.

Le fonctionnement de cet exemple de réalisation peut être légèrement modifié pour permettre la diffusion d'une cellule vers plusieurs sorties. L'adresse de sortie unique OA est remplacée par un mot binaire OM comportant un nombre de bits égal au nombre N de sorties du noeud. Chaque sortie destinataire de la cellule est indiquée par une valeur 1 et chaque sortie non destinaire est indiquée par une valeur 0, par exemple. La mémoire de cellules en attente, VIM, stocke des identificateurs de cellule en attente TSTP-OM au lieu des identificateurs TSTP-OA.

La mémoire VIM possède une entrée de comparaison ci, mais elle fonctionne un peu différemment de la mémoire VIM décrite précédemment car la comparaison doit porter sur le champ TSTP' et sur le seul bit non nul dans OM'. Les N-1 autres bits dans OM' et les N-1 autres bits correspondant dans le champ OM des identificateurs TSTP-OM mémorisés ne doivent pas être comparés. Les bits du champ OM dans chaque mot TSTP - OM doivent être masqués par les bits du champ OM' de TSTP'-OM' avant de faire la comparaison entre l'identificateur TSTP'-OM' et chaque identificateur de cellule en attente, TSTP- OM, mémorisé dans la mémoire VIM.

Le circuit de commande de transfert TC est modifié pour fournir des identificateurs de cellules à mettre en queue, TSTP'-OM', dans lesquels le champ TSTP' est encore l'identité d'un intervalle de temps où expire un délai d'attente, mais où OM' est un mot de N bits, parmi lesquels un seul bit a la valeur 1. Le rang de ce bit désigne une sortie unique, pour laquelle le circuit TC recherche des cellules à mettre en queue.

Le circuit TC comporte un compteur qui fournit successivement toutes les valeurs de 0 à TSTPₘₐₓ, modulo TSTPₘₐₓ, pour constituer le champ TSTP'; et un compteur associé à un décodeur qui, pour chaque valeur de TSTP', fournit successivement N valeurs :
0000...0001
0000...0010
0000...0100
...........
1000...0000 pour constituer le champ OM'. Les autres éléments du dispositif de reséquencement ne sont pas modifiés.

Considérons par exemple, le cas où il y a N = 8 sorties et où deux cellules ont des délais d'attente expirant au cours d'une même période de sous-cellule, désignée par l'étiquette temporelle TSTP₀; et où la première cellule est destinée à la première et à la cinquième sortie, alors que la seconde cellule est destinée à la troisième et à la cinquième sortie. Lorsque le délai d'attente de ces cellules expire, le circuit TC de commande de transfert fournit une suite de 8 identificateurs de cellule à mettre en queue, TSTP'-OM', ayant pour valeurs :
TSTP₀ - 0000 0001
TSTP₀ - 0000 0010
TSTP₀ - 0000 0100.
.................
TSTP₀ - 1000 0000

Dans cet exemple, le circuit AC fournit successivement :
1) une valeur AD1 de l'adresse NA correspondant à la première cellule, accompagnée du signal C de résultat positif et du signal QR de demande de mise en queue;
2) une valeur nulle de l'adresse NA, sans le signal C ni le signal QR;
3) une valeur AD2 de l'adresse NA correspondant à la seconde cellule, accompagnée du signal C et du signal QR;
4) une valeur nulle de l'adresse NA, sans le signal C ni le signal QR;
5) une valeur AD1 l'adresse NA correspondant à la première cellule, accompagnée d'une impulsion du signal QR; suivie immédiatement par la valeur AD2 de l'adresse NA correspondant à la seconde cellule, accompagnée d'une autre impulsion du signal QR; et un signal C commun;
   6, 7, 8) trois valeurs successives de l'adresse NA, qui sont nulles, et qui ne sont pas accompagnées du signal QR, ni du signal C.

Dans cet exemple, un seul numéro d'ordre est inscrit dans la mémoire de mise en queue correspondant à la cinquième sortie, pour la mise en queue de deux cellules.

Un emplacement des mémoires VIM et FSA ne doit pas être réutilisé tant qu'une cellule n'a pas été mise en queue dans les mémoires de queue de toutes les sorties destinataires. Le balayage de toutes les valeurs du champ OM' de l'identificateur TSTP'-OM' est réalisé au cours d'une période de sous-cellule, par conséquent toute adresse NA fournie par le circuit AC est réutilisable par le circuit de gestion d'adresses, FMM, dès la période suivante.
le dispositif selon l'invention est applicable à des cellules de longueur fixe ou à des cellules comprenant un nombre variable de sous-cellules ayant chacune une longueur fixe. Pour éviter tout déséquencement de cellule, et toute perte de cellule, il est nécessaire que la capacité des compteurs LWSN et LRSN, fournissant les numéros d'ordre SN et SN', soit supérieure au nombre maximal de sous-cellules que peut comporter une cellule, augmenté du nombre de périodes de sous-cellules correspondant au temps de transit maximal dans le réseau de commutation SW.

Pour éviter tout déséquencement, mais en tolérant la perte éventuelle de certaines cellules, il est possible de ne pas respecter la condition énoncée ci-dessus, mais il faut alors détecter tout dépassement du compteur LWSN par rapport au compteur LWRN, afin de bloquer la mise en queue de nouvelles cellules quand une mémoire de queue est pleine, de manière à garder les plus anciennes cellules et à laisser perdre les plus récentes, pour restituer des cellules toujours en bon ordre.

Une variante de réalisation consiste à attribuer une étiquette temporelle TSTP à chaque cellule sortant du réseau SW, au lieu de l'attribuer en entrée du réseau SW. Dans ce cas, le générateur TSG d'étiquettes temporelles est différent. Il comporte encore une horloge définissant des intervalles temporels de durée constante égale à une période de sous-cellule; et un compteur modulo TSTP max. Mais il comporte en outre : un circuit pour estimer le temps de transit de chaque cellule à travers le réseau SN; un circuit pour soustraire cette estimation au contenu du compteur; et un circuit pour additonner au résultat la durée du retard total que doit subir chaque cellule. Le résultat de ce calcul constitue la valeur de l'étiquette TSTP indiquant l'intervalle de temps où expire le délai d'attente de la cellule. Elle est utilisable exactement comme la valeur d'étiquette TSTP attribuée en entrée du réseau SW, conformément à la description ci-dessus. La réalisation de ces circuits est à la portée de l'Homme de l'Art.

L'unité de temps est choisie de préférence égale à la période de sous-cellule car la durée de chaque cellule est au moins égale à une période de sous-cellule, mais il est possible d'utiliser une unité de temps plus petite.

## Revendications

1. Dispositif de reséquencement (RU) pour un noeud d'un système de commutation de cellules, chaque cellule étant constituée d'un nombre variable de sous-cellules ayant une longueur fixe, ce noeud comportant un réseau de commutation (SW) transmettant les cellules avec des premiers retards variables, toutes les sous-cellules d'une même cellule subissant un même premier retard; ce dispositif de reséquencement (RU) comportant des moyens pour stocker toutes les cellules ayant été transmises à travers le réseau de commutation, puis les émettre sur au moins une sortie du dispositif de reséquencement, après l'expiration de divers délais d'attente constituant des seconds retards tels que, pour chaque cellule, la somme du premier et du second retard est égale à une valeur prédéterminée sensiblement identique pour toutes les cellules; ces moyens comportant :
- une mémoire tampon (BM) pour stocker toutes les sous-cellules de chaque cellule reçue par le dispositif de reséquencement;
- une mémoire d'adresses (FSAM) pour mémoriser l'adresse (FSA), de la mémoire tampon, contenant la première sous-cellule de chaque cellule;
- des moyens (TSG, IC1, ..., ICM, CU) pour retrouver l'adresse (FSA'), de la mémoire d'adresses, contenant la première sous-cellule d'une cellule, lorsque le délai d'attente de cette dernière a expiré, et qu'une sortie qui doit émettre cette cellule est disponible;
**caractérisé en ce que** les moyens pour retrouver l'adresse (FSA'), de la mémoire tampon, contenant la première sous-cellule d'une cellule, comportent :
- une mémoire (VIM) dite de cellules en attente, du type accessible par son contenu, pour mémoriser un identificateur dit de cellule en attente (TSTP-OA), lorsqu'une cellule est stockée dans la mémoire tampon (BM); cet identificateur étant stocké à une adresse (FA) identique à celle où est stockée, dans la mémoire d'adresses (FSAM), l'adresse FSA de la première sous-cellule; et cet identificateur étant constitué : d'une étiquette temporelle (TSTP) identifiant un intervalle de temps au cours duquel expire le délai d'attente de cette cellule, et de l'identité (OA; OM) d'au moins une sortie sur laquelle elle doit être émise;
- des moyens (TC, AC) pour retrouver, dans la mémoire de cellules en attente, (VIM), l'identificateur (TSTP-OA) de chaque cellule lorsque son délai d'attente expire, et fournir, pour chaque identificateur retrouvé, l'adresse (NA), de la mémoire de cellules en attente (VIM) qui contient cet identificateur retrouvé;
- des mémoires (QC1, ..., QCN) dites de queue, associées respectivement aux sorties du noeud, et accessibles par leur contenu; pour mémoriser un numéro d'ordre pour chaque cellule qui est destinée à la sortie associée à la mémoire considérée;
- des moyens (DMX, SNL1, ..., SNLN) pour déterminer et inscrire dans une mémoire de queue un numéro d'ordre, à l'adresse (NA) fournie par les moyens (TC, AC) pour retrouver l'identificateur de chaque cellule lorsque son délai d'attente expire;
- des moyens (SNL1, ..., SNLN, FFO1, ..., FFON) pour retrouver, dans un ordre croissant, chaque numéro (SN') mémorisé dans la mémoire de queue d'une sortie, lorsque cette sortie devient disponible; et pour restituer l'adresse (NA'), de cette mémoire de queue, contenant le numéro retrouvé (SN');
- des moyens (MUX), pour lire une adresse (FSA') de première sous-cellule, dans la mémoire d'adresses (FSAM), à l'adresse restituée par les moyens (SNL1, ..., SNLN, LRSN) pour retrouver chaque numéro.

2. Dispositif selon la revendication 1, **caractérisé en ce que** les moyens pour retrouver, dans la mémoire de cellules en attente (VIM), l'identificateur de chaque cellule lorsque son délai d'attente expire, et fournir pour chaque identificateur retrouvé, chaque adresse (NA), de la mémoire de cellule en attente (VIM), qui contient cet identificateur retrouvé, comportent :
- des moyens (TC) pour fournir à une entrée de comparaison de la mémoire de cellules en attente (VIM), pour chaque intervalle de temps correspondant à un délai d'attente qui expire, une suite d'identificateurs (TSTP'-OA') dits de cellules à émettre, constitués chacun de l'identité (TSTP') de l'intervalle de temps en cours, et de l'identité (OA') d'une sortie unique du noeud; cette suite étant constituée avec les identités (OA') de toutes les sorties du noeud;
- des moyens (AC) couplés à des sorties de la mémoire de cellules en attente (VIM) pour fournir successivement chaque adresse (NA), de la mémoire de cellules en attente, contenant un identificateur retrouvé.

3. Dispositif selon la revendication 1, **caractérisé en ce que** les moyens pour déterminer, et inscrire dans une mémoire de queue (QC1, ..., QCN) un numéro d'ordre (SN) comportent, pour chaque sortie du noeud, un compteur (LWSN) fournissant un numéro d'ordre (SN) qui est incrémenté d'une unité lorsqu'au moins un identificateur de cellule en attente est retrouvé dans la mémoire de cellules en attente (VIM), pour un intervalle de temps donné et une sortie donnée.

4. Dispositif selon la revendication 1, **caractérisé en ce que** les moyens pour retrouver, dans un ordre croissant, chaque numéro (SN') mémorisé, comportent, pour chaque sortie du noeud, un compteur (LRSN) fournissant un numéro d'ordre à retrouver (SN') qui est incrémenté d'une unité lorsque cette sortie devient disponible, ce numéro d'ordre à retrouver (SN') étant appliqué à une entrée de comparaison de la mémoire de queue (QC1, ..., QCN) associée à cette sortie.

## Patentansprüche

1. Vorrichtung (RU) zur Neusequenzierung für einen Knoten eines Vermittlungssystems für Zellen, wobei jede Zelle aus einer variablen Anzahl von Unterzellen mit einer festen Länge besteht, wobei dieser Knoten ein Vermittlungsnetz (SW) aufweist, das die Zellen mit ersten variablen Verzögerungen überträgt, wobei alle Unterzellen einer selben Zelle die gleiche erste Verzögerung erfahren; wobei diese Vorrichtung (RU) zur Neusequenzierung Mittel zum Speichern aller Zellen, die über das Vermittlungsnetz übertragen wurden, dann zum Senden derer auf wenigstens einen Ausgang der Vorrichtung zur Neusenquenzierung nach Ablauf von verschiedenen Wartezeiten aufweist, die zweite Verzögerungen bilden, so dass für jede Zelle die Summe der ersten und der zweiten Verzögerung gleich einem vorher bestimmten Wert ist, der für alle Zellen im Wesentlichen identisch ist; wobei diese Mittel aufweisen:
- einen Pufferspeicher (BM) zum Speichern der Unterzelle jeder von der Vorrichtung zur Neusequenzierung empfangenen Zelle;
- einen Adressenspeicher (FSAM) zum Speichern der Adresse (FSA) des Pufferspeichers, die die erste Unterzelle jeder Zelle enthält;
- Mittel (TSG, IC1, ..., ICM, CU) zum Wiedergewinnen der Adresse (FSA') des Adressenspeichers, die die erste Unterzelle einer Zelle enthält, wenn die Wartezeit dieser letzteren abgelaufen ist ein Ausgang, der diese Zelle senden soll, verfügbar ist;
**dadurch gekennzeichnet dass** die Mittel zum Wiedergewinnen der Adresse (FSA') des Pufferspeichers, die die erste Unterzelle einer Zelle enthält, umfassen:
- einen Speicher (VIM), Speicher für wartende Zellen genannt, des Typs, der über seinen Inhalt zugänglich ist, um einen Bezeichner, Bezeichner für eine wartende Zelle (TSTP-OA) genannt, zu speichern, wenn eine Zelle im Pufferspeicher (BM) gespeichert ist; wobei dieser Bezeichner an einer Adresse (FA) gespeichert wird, die mit derjenigen identisch ist, an der im Adressenspeicher (FSAM) die Adresse FSA der ersten Unterzelle gespeichert ist, und wobei dieser Bezeichner besteht aus: einer Zeitmarke (TSTP), die ein Zeitintervall identifiziert, während dessen die Wartezeit für diese Zelle abläuft, und der Identität (OA; OM) wenigstens eines Ausgangs, auf dem sie gesendet werden soll;
- Mittel (TC, AC), um im Speicher für wartende Zellen, (VIM), den Bezeichner (TSTP-OA) für jede Zelle wiederzugewinnen, wenn ihre Wartezeit abgelaufen ist, und für jeden wiedergewonnenen Bezeichner die Adresse (NA) des Speichers (VIM) für wartende Zellen zu liefern, der diesen wiedergewonnenen Bezeichner enthält;
- Speicher (QC1, ..., QCN), Warteschlangenspeicher genannt, die entsprechend zu den Ausgängen des Knotens gehören und über ihren Inhalt zugänglich sind; um eine laufende Nummer für jede Zelle zu speichern, die für den zum betrachteten Speicher gehörigen Ausgang bestimmt ist;
- Mittel (DMX, SNL1, ..., SNLN), um eine laufende Nummer zu ermitteln und in einen Warteschlangenspeicher an die Adresse (NA) einzutragen, die von den Mitteln (TC; AC) geliefert wird, um den Bezeichnet jeder Zelle wiederzugewinnen, wenn ihre Wartezeit abläuft;
- Mittel (SNL1, ..., SNLN, FFO1, ..., FFON), um in zunehmender Reihenfolge jede im Warteschlangenspeicher gespeicherte Nummer (SN') eines Ausgangs wiederzugewinnen, wenn dieser Ausgang verfügbar wird; und um die Adresse (NA') dieses Warteschlangenspeichers zu rekonstruieren, die die wiedergewonnene Nummer (SN') enthält;
- Mittel (MUX), um eine Adresse (FSA') für eine erste Unterzelle im Adressenspeicher (FSAM) an der von den Mitteln (SNL1, ..., SNLN, LRSN) rekonstruierten Adresse zu lesen, um jede Nummer wiederzugewinnen.

2. Vorrichtung nach Anspruch 1, **dadurch gekennzeichnet, dass** die Mittel, um im Speicher (VIM) für wartende Zellen den Bezeichner für jede Zelle wiederzugewinnen, wenn ihre Wartezeit abgelaufen ist, und für jeden wiedergewonnenen Bezeichner jede Adresse (NA) des Speichers (VIM) für wartende Zellen zu liefern, der diesen wiedergewonnenen Bezeichner enthält, umfassen:
- Mittel (TC), um an einen Vergleichseingang des Speichers (VIM) für wartende Zellen für jedes Zeitintervall, das einer Wartezeit entspricht, die ausläuft, eine Folge von Bezeichnern (TSTP'-OA') zu liefern, Bezeichner für zu sendende Zellen genannt, die jeweils aus der Identität (TSTP') des laufenden Zeitintervalls und der Identität (OA') eines einzigen Ausgangs des Knotens bestehen; wobei diese Folge mit den Identitäten (OA') aller Ausgänge des Knotens gebildet wird;
- Mittel (AC), die an Ausgänge des Speichers (VIM) für wartende Zellen gekoppelt sind, um nacheinander jede Adresse (NA) des Speichers für wartende Zellen zu liefern, die einen wiedergewonnenen Bezeichner enthält.

3. Vorrichtung nach Anspruch 1, **dadurch gekennzeichnet, dass** die Mittel, um eine laufende Nummer (SN) zu ermitteln und in einen Warteschlangenspeicher (QC1, ..., QCN) einzutragen, für jeden Ausgang des Knotens einen Zähler (LWSN) umfassen, der eine laufende Nummer (SN) liefert, die um eine Einheit erhöht wird, wenn für ein gegebenes Zeitintervall und einen gegebenen Ausgang wenigstens ein Bezeichner für eine wartende Zelle im Speicher (VIM) für wartende Zellen wiedergewonnen wird.

4. Vorrichtung nach Anspruch 1, **dadurch gekennzeichnet, dass** die Mittel, um in einer zunehmenden Reihenfolge jede gespeicherte Nummer (SN') wiederzugewinnen, für jeden Ausgang des Knotens einen Zähler (LRSN) umfassen, der eine wiederzugewinnende laufende Nummer (SN') liefert, die um eine Einheit erhöht wird, wenn dieser Ausgang verfügbar wird, wobei diese wiederzugewinnende laufende Nummer (SN) an einen Vergleichsseingang des Warteschlangenspeichers (QC1, ..., QCN) gegeben wird, der zu diesem Ausgang gehört.

## Claims

1. Resequencing device (RU) for a node of a cell switching system, each cell comprising a variable number of sub-cells of fixed length, said node comprising a switching network (SW) transmitting said cells with first variable delays, all the sub-cells of a same cell being subjected to a same first delay; said resequencing device (RU) including means for storing all said cells that have been transmitted through said switching network and for then sending them to at least one output of said resequencing device after various waiting delays constituting second delays having expired so that for each cell the sum of said first and said second delay is equal to a predetermined value substantially equal for all said cells; said means including:
- a buffer memory (BM) for storing all the sub-cells of each cell received by said resequencing device;
- an address memory (FSAM) for storing the address (FSA) of said buffer memory containing the first sub-cell of each cell;
- means (TSG, IC1, ... , ICM, CU) for finding in said address memory the address (FSA') containing the first sub-cell of a cell when the waiting delay of the latter has expired and when an output which has to send said cell is available;
**characterized in that** said means for finding the address (FSA') of said buffer memory containing the first sub-cell of a cell includes:
- a so-called waiting-cell memory (VIM), addressable by its content, for storing a so-called waiting-cell identifier (TSTP-OA) when a cell is stored in said buffer memory (BM); said identifier being stored at an address (FA) identical to the address where the address (FSA) of said first sub-cell is stored in said address memory (FSAM); and said identifier including: a time label (TSTP) identifying a time slot during which the waiting delay of said cell will expire and the identity (OA; OM) of at least one output on which said cell has to be sent;
- means (TC, AC) for finding in said waiting-cell memory (VIM) the identifier (TSTP-OA) of each cell when its waiting delay expires, and for providing for each found identifier the address (NA) of said waiting-cell memory (VIM) containing the found identifier;
- so-called queuing memories (QC1, ... , QCN) respectively associated with the outputs of said node and addressable by their content; for storing a sequence number for each cell intended to the output associated to the considered memory;
- means (DMX, SNL1, ... , SNLN) for determining and writing a sequence number in a queuing memory at the address (NA) provided by said means (TC, AC) for finding the identifier of each cell when its waiting delay expires;
- means (SNL1, ... , SNLN, FFO1, ... , FFON) for finding, in ascending order, each sequence number (SN') of an output stored in said queuing memory when said output becomes available; and for returning the address (NA') of said queuing memory containing the found number (SN');
- means (MUX) for reading an address (FSA') of a first sub-cell in said address memory (FSAM) at the address returned by said means (SNL1 ... , SNLN, LRSN) for finding each number.

2. Device according to claim 1, **characterized in that** said means for finding in said waiting-cell memory (VIM) the identifier of each cell when its waiting delay expires and for providing for each found identifier each address (NA) of said waiting-cell memory (VIM) that contains said found identifier comprise:
- means (TC) for providing to a comparison input of said waiting-cell memory (VIM), for each time slot corresponding to an expiring waiting delay, a sequence of so-called cell-to-send identifiers (TSTP'-OA') each constituted by the identity (TSTP') of the current time slot and by the identity (OA') of a single output of said node; said sequence being constituted by the identities (OA') of all the outputs of said node;
- means (AC) coupled to outputs of said waiting-cell memory (VIM) for successively providing each address (NA) of said waiting-cell memory containing a found identifier.

3. Device according to claim 1, **characterized in that** said means for determining and writing a sequence number (SN) in a queuing memory (QC1, ... , QCN) comprise, for each output of said node, a counter (LWSN) providing a sequence number (SN) incremented by one unit when at least one waiting-cell identifier is found in said waiting-cell memory (VIM) for a given time slot and a given output.

4. Device according to claim 1, **characterized in that** said means for finding, in ascending order, each stored number (SN') includes, for each output of said node, a counter (LRSN) providing a sequence number to be found (SN') which is incremented by one unit when said output becomes available, said sequence number to be found (SN') being applied to a comparison input of said queuing memory (QC1, ... , QCN) associated with said output.
